# FASCICULE DE BREVET EUROPEEN

(11) **EP 2 443 035 B1**
(45) Date de publication et mention de la délivrance du brevet: **09.10.2013**
(21) Numéro de dépôt: 10738001.6
(22) Date de dépôt: 14.06.2010
(51) Int. Cl.: H01M 8/04, B64D 41/00

(54) **AERONEF POURVU D'UN SYSTEME DE PILE A COMBUSTIBLE**
FLUGZEUG MIT EINEM BRENNSTOFFZELLENSYSTEM
AIRCRAFT PROVIDED WITH A FUEL CELL SYSTEM

(30) Priorité: 17.06.2009 FR 0902941
(43) Date de publication de la demande: 25.04.2012
(73) Titulaire: Airbus SAS, 31700 Blagnac (FR)
(72) Inventeur: BUCHHEIT, Catherine, 32600 L'isle Jourdain (FR)
(74) Mandataire: Gevers France
(86) Numéro de dépôt international: PCT/FR2010/051177
(87) Numéro de publication internationale: WO 2010/146291

(56) Documents cités:
- EP-A2- 0 957 026
- WO-A1-98/05553
- DE-A1-102005 045 130

## Description

La présente invention concerne un aéronef pourvu d'un système de pile à combustible.

Des exemples de l'art antérieur sont fournis par les documents DE 10 2005 045 130 A1 et EP 0 957 026 A2. On sait que de nombreux aéronefs comportent un groupe auxiliaire de puissance destiné à produire de l'énergie à bord pour permettre d'alimenter au sol, quand les moteurs sont arrêtés, et éventuellement en vol lors de la panne d'un moteur, différents systèmes de bord consommant de la puissance électrique ou utilisant une pression pneumatique ou hydraulique.

On sait de plus que, comme groupe auxiliaire de puissance, on peut utiliser un système de pile à combustible relié à un réservoir de combustible, ce système de pile à combustible présentant de nombreux avantages lors de son fonctionnement, tels que l'absence d'émission de particules polluantes, la production d'eau et un faible niveau de bruit.

Toutefois, le réservoir de combustible rapporté, installé et fixé à l'intérieur du fuselage de l'aéronef constitue une limitation dans le développement des systèmes de pile à combustible embarqués. Notamment, ce réservoir de combustible ne permet pas de développer une autonomie de fonctionnement satisfaisante du système de pile à combustible en raison de son volume de stockage réduit.

De plus, il est difficilement transportable hors de l'aéronef, ce qui implique, lorsque l'aéronef est au sol, un service de remplissage relativement long à mettre en place, compliqué à réaliser du fait de la manipulation délicate du combustible, tel que l'hydrogène, facilement inflammable et par conséquent coûteux. En outre, il nécessite l'utilisation de pompes et de stations de remplissage du combustible.

Par ailleurs, des renforts structurels faisant office de barrière anti-feu doivent être disposés dans le fuselage de l'aéronef à proximité du réservoir de combustible.

Enfin, la maintenance du réservoir de combustible, difficilement accessible dans le fuselage de l'aéronef, n'est pas aisée.

La présente invention a pour objet de remédier à ces inconvénients.

A cette fin selon l'invention, l'aéronef dont la partie arrière du fuselage contient un système de pile à combustible est remarquable en ce qu'il comporte un cône arrière qui est monté de façon amovible par rapport à ladite partie arrière du fuselage, en prolongement de cette dernière, et qui est conformé en réservoir de combustible pour ledit système de pile à combustible contenu dans ladite partie arrière du fuselage.

Ainsi, un tel réservoir de combustible amovible, formant cône arrière, peut être interchangé avec un autre réservoir compatible, de taille identique ou différente, par des manoeuvres extérieures audit aéronef.

Grâce à l'amovibilité et à l'interchangeabilité du réservoir conforme à la présente invention, on peut procéder à son remplissage en usine et le réutiliser sur le même aéronef ou sur d'autres aéronefs. Une fois rempli en usine, le réservoir conforme à l'invention peut être stocké au voisinage de l'aéronef, pour être ensuite fixé sur la partie arrière du fuselage de celui-ci à la place d'un réservoir vide préalablement détaché. Une telle alimentation en combustible peut être effectuée dans des conditions sécurisées, en évitant toute manipulation risquée du combustible.

On notera que la disposition du réservoir selon l'invention, à l'extérieur du fuselage de l'aéronef, permet l'adaptation de la structure du cône arrière aux contraintes résultant du stockage du combustible plutôt que l'adaptation de la structure du fuselage de l'aéronef à ces contraintes. De plus, une telle disposition de réservoir permet d'assurer aisément la sécurité, notamment en ce qui concerne les éventuelles fuites de combustible et les risques de feu.

Avantageusement, des moyens de guidage et de fixation sont prévus pour le montage dudit cône arrière à la partie arrière du fuselage. Ces moyens de guidage et de fixation peuvent comporter au moins une glissière saillante.

Par ailleurs, des moyens de connexion complémentaires sont prévus à la partie arrière du fuselage et sur ledit cône arrière pour assurer automatiquement une liaison fluide entre ledit réservoir et ledit système de pile à combustible, lors du montage dudit cône arrière à la partie arrière du fuselage.

De préférence, ledit cône arrière comporte une jupe longitudinale avant saillante qui est apte à être emboîtée sur ladite partie arrière du fuselage, lorsque ledit cône arrière est fixé à cette dernière.

La partie arrière du fuselage peut être tronquée par une face d'extrémité arrière sensiblement plane et le cône arrière peut comporter une face d'extrémité avant sensiblement plane, lesdites faces d'extrémité arrière et avant portant lesdits moyens de connexion complémentaires et au moins une partie desdits moyens de guidage et de fixation et étant adjacentes lorsque le cône arrière est fixé à la partie arrière.

Avantageusement, une paroi anti-feu est agencée sur la face d'extrémité arrière du fuselage et/ou sur la face d'extrémité avant du cône arrière.

Il résulte de ce qui précède que la présente invention concerne également un cône arrière en tant que tel conformé en réservoir de combustible et fixable de façon amovible sur la partie arrière du fuselage d'un aéronef.

Les figures des dessins annexés feront bien comprendre comment l'invention peut être réalisée. Sur ces figures, des références identiques désignent des éléments semblables.
La figure 1 représente schématiquement, en vue latérale, la partie arrière du fuselage d'un aéronef sur laquelle est fixée un cône arrière amovible selon l'invention.
Les figures 2 et 3 illustrent schématiquement, en vue de dessus partielle, un exemple de réalisation de la présente invention, ledit cône arrière amovible étant respectivement représenté détaché et fixé à la partie arrière du fuselage.

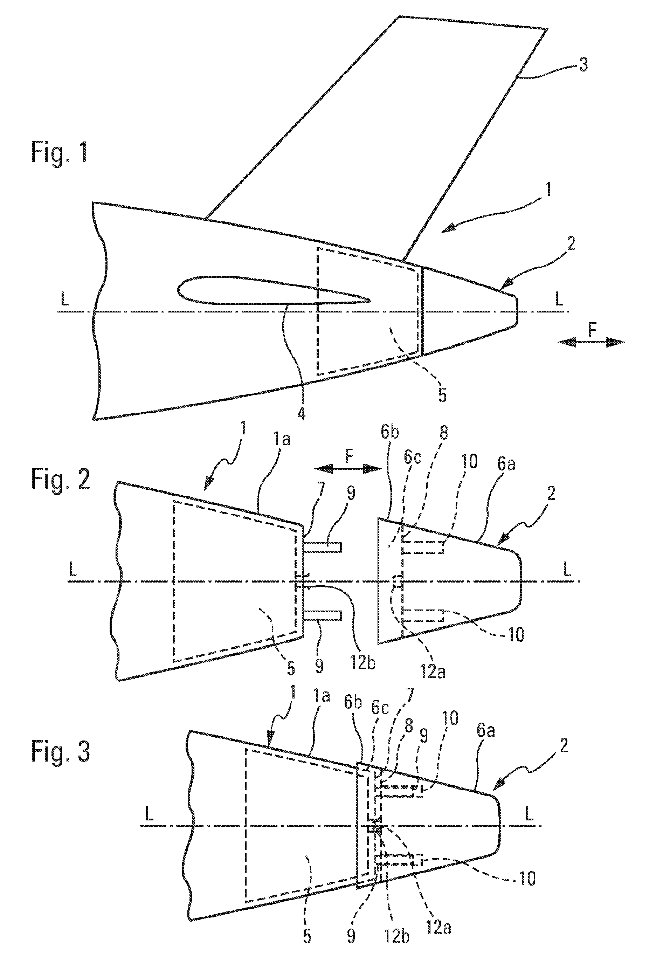

La queue d'aéronef montrée sur la figure 1 comprend une partie arrière de fuselage 1 et un cône arrière 2, ladite partie arrière de fuselage 1 comprenant un empennage vertical 3, un empennage horizontal 4 et un système de pile à combustible 5 embarqué à l'intérieur du fuselage.

Le cône arrière 2 est conformé en réservoir de combustible et fixé de façon amovible au fuselage, comme l'illustre la double flèche F. La partie arrière 1 du fuselage est donc tronquée d'un volume correspondant au cône arrière réservoir 2. La fonction amovible et interchangeable du cône arrière réservoir 2 permet son remplissage en usine et le rend réutilisable sur le même aéronef ou sur d'autres aéronefs. De même, sa maintenance est réalisée en usine.

Le cône arrière réservoir 2 est un cône arrière standard, c'est-à-dire qu'il peut être remplacé par un autre cône arrière compatible, de taille identique ou différente.

Le cône arrière réservoir 2 peut présenter une extrémité allongée non représentée sur les figures, ce qui augmente d'autant le volume de stockage du combustible.

Dans l'exemple de réalisation des figures 2 et 3, le cône arrière réservoir 2 est délimité par une enveloppe longitudinale 6a et une face d'extrémité avant plane 8. Il comporte une jupe longitudinale avant 6b qui prolonge l'enveloppe longitudinale 6a en saillie de la face d'extrémité avant 8. Un espace 6c est ainsi délimité par la jupe longitudinale avant 6b, en avant de ladite face d'extrémité 8.

Lorsque le cône arrière réservoir 2 est fixé sur la partie arrière 1 du fuselage, ce qui est illustré par la figure 3, la jupe longitudinale avant 6b est emboîtée autour de la paroi longitudinale 1 a de la partie arrière 1 au niveau de l'espace 6b et la face d'extrémité avant 8 du cône arrière réservoir 2 est adjacente à une face d'extrémité arrière plane 7 de la partie arrière 1, cette face d'extrémité arrière plane 7 étant orthogonale à l'axe longitudinal du fuselage L-L.

Le cône arrière réservoir 2 est monté sur la partie arrière 1 du fuselage à l'aide d'un équipement de support non représenté.

Cet équipement de support déplace en translation (flèche F) le cône arrière réservoir 2 selon l'axe longitudinal L-L du fuselage de l'aéronef. Il permet d'amener la face d'extrémité avant 8, perpendiculairement à l'axe longitudinal L-L et à proximité de la face d'extrémité arrière 7 de la partie arrière 1. Il peut présenter des ventouses latérales pour protéger la partie arrière du fuselage 1 de chocs potentiels avec le cône arrière réservoir 2.

Des moyens de guidage et de fixation disposés sur la partie arrière 1 du fuselage coopèrent avec des moyens de guidage et de fixation disposés sur le cône arrière réservoir 2. Les moyens de guidage (les moyens de fixation peuvent être de tout type connu et ne sont pas représentés sur les figures 2 et 3) comprennent, dans l'exemple des figures 2 et 3, deux glissières 9 disposées en saillie de la face d'extrémité arrière 7 de la partie arrière 1 du fuselage et coopérant avec deux logements 10 situés dans le cône arrière réservoir 2 à l'opposé de la jupe longitudinale avant 6a par rapport à la face d'extrémité 8. Les glissières 9 s'emboîtent dans les logements 10 qui assurent leur guidage par leur forme complémentaire à la forme longiligne des glissières 9. En variante, les glissières 9 peuvent être disposés sur le cône arrière réservoir 2 et les logements 10 sur la partie arrière 1.

Des éléments de renforts destinés à la protection du fuselage contre un éventuel incendie se déclenchant à proximité du cône arrière réservoir 2 et non représentés peuvent être disposés sur la face d'extrémité arrière 7 et la face d'extrémité avant 8.

Le cône arrière réservoir 2 est relié au système de pile à combustible 5 par des organes de connexion fluidique 12a et 12b. Un organe de connexion fluidique mâle 12a disposé en saillie de la face d'extrémité avant 8 s'emboîte automatiquement dans un organe de connexion fluidique femelle 12b disposé en saillie de la face d'extrémité arrière 7 lors du montage du cône arrière 2 sur la partie arrière 1. Des moyens d'alimentation non représentés déplacent le combustible du cône arrière réservoir 2 vers le système de pile à combustible 5

Le cône arrière réservoir 2 peut comporter, sur son enveloppe longitudinale 6a, des cellules photovoltaïques qui permettent la génération d'énergie pour le fonctionnement des systèmes de bord de l'aéronef, en particulier lorsque l'aéronef est au sol.

## Revendications

1. Aéronef dont la partie arrière (1) du fuselage contient un système de pile à combustible (5),
**caractérisé en ce qu'**il comporte un cône arrière (2) qui est monté de façon amovible par rapport à ladite partie arrière (1) du fuselage, en prolongement de cette dernière, et qui est conformé en réservoir de combustible pour ledit système de pile à combustible (5) contenu dans ladite partie arrière (1) du fuselage.

2. Aéronef selon la revendication 1,
**caractérisé en ce que** ledit cône arrière (2) est interchangeable avec des cônes arrière compatibles.

3. Aéronef selon l'une des revendications 1 à 2,
**caractérisé en ce que** des moyens de guidage et de fixation (9, 10) sont prévus pour le montage dudit cône arrière (2) à la partie arrière (1) du fuselage.

4. Aéronef selon la revendication 3,
**caractérisé en ce que** lesdits moyens de guidage et de fixation comportent au moins une glissière saillante (9).

5. Aéronef selon l'une des revendications 1 à 4,
**caractérisé en ce que** des moyens de connexion complémentaires (12a, 12b) sont prévus à ladite partie arrière (1) du fuselage et sur ledit cône arrière (2) pour assurer automatiquement une liaison fluide entre ledit réservoir et ledit système de pile à combustible (5), lors du montage dudit cône arrière (2) à ladite partie arrière (1) du fuselage.

6. Aéronef selon l'une des revendications 1 à 5,
**caractérisé en ce que** ledit cône arrière (2) comporte une jupe longitudinale avant saillante (6b) qui est apte à être emboîtée sur ladite partie arrière (1) du fuselage, lorsque ledit cône arrière (2) est fixé à cette dernière.

7. Aéronef selon l'une des revendications 5 ou 6,
**caractérisé en ce que** la partie arrière (1) du fuselage est tronquée par une face d'extrémité arrière (7) sensiblement plane et **en ce que** le cône arrière (2) comporte une face d'extrémité avant (8) sensiblement plane, lesdites faces d'extrémité arrière (7) et avant (8) portant lesdits moyens de connexion complémentaires (12a, 12b) et au moins une partie des dits moyens de guidage et de fixation (9, 10) et étant adjacentes lorsque le cône arrière (2) est fixé à la partie arrière (1).

8. Cône arrière pour aéronef dont la partie arrière (1) du fuselage contient un système de pile à combustible (5),
**caractérisé en ce qu'**il est conformé en réservoir de combustible et **en ce qu'**il est destiné à être monté de façon amovible sur ladite partie arrière (1) du fuselage.

9. Cône arrière selon la revendication 8,
**caractérisé en ce qu'**il est interchangeable avec des cônes arrière compatibles.

10. Cône arrière selon l'une des revendications 8 ou 9,
**caractérisé en ce qu'**il comporte une jupe longitudinale avant saillante (6b) qui est apte à être emboîtée sur la partie arrière (1) du fuselage, lorsque ledit cône arrière (2) est fixé à cette dernière.

## Patentansprüche

1. Flugzeug, dessen hinterer Rumpfteil (1) ein Brennstoffzellensystem (5) enthält,
**dadurch gekennzeichnet, dass** es einen hinteren Kegel (2) umfasst, der abnehmbar in Bezug zum hinteren Rumpfteil (1) in der Verlängerung dieses letztgenannten montiert ist, und der als Brennstoffbehälter für das Brennstoffzellensystem (5), das in dem hinteren Rumpfteil (1) enthalten ist, ausgebildet ist.

2. Flugzeug nach Anspruch 1,
**dadurch gekennzeichnet, dass** der hintere Konus (2) mit kompatiblen hinteren Kegeln austauschbar ist.

3. Flugzeug nach einem der Ansprüche 1 bis 2,
**dadurch gekennzeichnet, dass** Führungs- und Befestigungsmittel (9, 10) für die Montage des hinteren Kegels (2) am hinteren Rumpfteil (1) vorgesehen sind.

4. Flugzeug nach Anspruch 3,
**dadurch gekennzeichnet, dass** die Führungs- und Befestigungsmittel mindestens eine vorspringende Gleitschiene (9) umfassen.

5. Flugzeug nach einem der Ansprüche 1 bis 4,
**dadurch gekennzeichnet, dass** komplementäre Anschlussmittel (12a, 12b) am hinteren Rumpfteil (1) und auf dem hinteren Kegel (2) vorgesehen sind, um automatisch eine Fluidverbindung zwischen dem Behälter und dem Brennstoffzellensystem (5) bei der Montage des hinteren Kegels (2) am hinteren Rumpfteil (1) zu gewährleisten.

6. Flugzeug nach einem der Ansprüche 1 bis 5,
**dadurch gekennzeichnet, dass** der hintere Kegel (2) eine vorspringende vordere Längsschürze (6b) umfasst, die geeignet ist, auf den hinteren Rumpfteil (1) gesteckt zu werden, wenn der hintere Kegel (2) an diesem letztgenannten befestigt wird.

7. Flugzeug nach einem der Ansprüche 5 oder 6,
**dadurch gekennzeichnet, dass** der hintere Rumpfteil (1) durch eine im Wesentlichen ebene hintere Endfläche (7) kegelstumpfartig abgeschnitten ist, und dass der hintere Kegel (2) eine im Wesentlichen ebene vordere Endfläche (8) umfasst, wobei die hintere (7) und die vordere (8) Endfläche die komplementären Anschlussmittel (12a, 12b) und mindestens einen Teil der Führungs- und Befestigungsmittel (9, 10) tragen und aneinander grenzen, wenn der hintere Kegel (2) am hinteren Teil (1) befestigt ist.

8. Hinterer Kegel für ein Flugzeug, dessen hinterer Rumpfteil (1) ein Brennstoffzellensystem (5) enthält,
**dadurch gekennzeichnet, dass** er als Brennstoffbehälter ausgeführt ist, und dass er dazu bestimmt ist, abnehmbar auf dem hinteren Rumpfteil (1) montiert zu werden.

9. Hinterer Kegel nach Anspruch 8,
**dadurch gekennzeichnet, dass** er mit kompatiblen hinteren Kegeln austauschbar ist.

10. Hinterer Kegel nach einem der Ansprüche 8 oder 9,
**dadurch gekennzeichnet, dass** er eine vorspringende vordere Längsschürze (6b) umfasst, die geeignet ist, auf den hinteren Rumpfteil (1) gesteckt zu werden, wenn der hintere Kegel (2) an diesem letztgenannten befestigt ist.

## Claims

1. An aircraft having the rear portion (1) of the fuselage containing a fuel cell system (5),
**characterized in that** it comprises a rear cone (2) being removably mounted relative to said rear portion (1) of the fuselage, so as to form an extension of the latter, and which is shaped as a fuel tank for said fuel cell system (5) contained in said rear portion (1) of the fuselage.

2. The aircraft according to claim 1,
**characterized in that** said rear cone (2) is interchangeable with compatible rear cones.

3. The aircraft according to any of claims 1 to 2, cha
racterized in that guiding and fastening means (9, 10) are provided for mounting said rear cone (2) relative to the rear portion (1) of the fuselage.

4. The aircraft according to claim 3,
**characterized in that** said guiding and fastening means comprise at least one projecting slide (9).

5. The aircraft according to any of claims 1 to 4, cha
racterized in that complementary connection means (12a, 12b) are provided at said rear portion (1) of the fuselage and on said rear cone (2) so as to automatically provide a fluidic link between said tank and said fuel cell system (5), upon said rear cone (2) being mounted relative to said rear portion (1) of the fuselage.

6. The aircraft according to any of claims 1 to 5, ch
aracterized in that said rear cone (2) comprises a projecting front longitudinal skirt (6b) being able to be fitted on said rear portion (1) of the fuselage, when said rear cone (2) is fastened to the latter.

7. The aircraft according to any of claims 5 or 6,
**characterized in that** the rear portion (1) of the fuselage is truncated by a substantially planar rear end side (7) and **in that** the rear cone (2) comprises a substantially planar front end side (8), said rear (7) and front (8) end sides carrying said complementary connection means (12a, 12b) and at least one portion of said guiding and fastening means (9, 10) and being adjacent when the rear cone (2) is fastened to the rear portion (1).

8. A rear cone for an aircraft having the rear portion (1) of the fuselage containing a fuel cell system (5),
**characterized in that** it is shaped as a fuel tank and **in that** it is adapted for being removably mounted on said rear portion (1) of the fuselage.

9. The rear cone according to claim 8,
**characterized in that** it is interchangeable with compatible rear cones.

10. The rear cone according to any of claims 8 or 9,
**characterized in that** it comprises a projecting front longitudinal skirt (6b) being able to be fitted on the rear portion (1) of the fuselage, when said rear cone (2) is fastened to the latter.
